# EUROPEAN PATENT APPLICATION

(11) **EP 3 316 664 A1**
(43) Date of publication of application: **02.05.2018**
(21) Application number: 17198303.4
(22) Date of filing: 25.10.2017
(51) Int. Cl.: H05B 33/08, H05B 37/02

(54) **MODULAR LIGHTING CONTROLLER AND DATA ACQUISITION PLATFORM**

(30) Priority: 26.10.2016 US 201615334419
(71) Applicant: General Electric Company, Schenectady, NY 12345 (US)
(72) Inventor: LORINCZ, Daniel, 1340 Budapest (HU); DUDÁS, Péter, 1340 Budapest (HU); VARJASI, Tamas, 1340 Budapest (HU); BOTH, Tamás, 1340 Budapest (HU); DULL, Gabor, 1340 Budapest (HU)
(74) Representative: Foster, Christopher Michael

(57) **Abstract**

There is provided a system (100) disposed within a luminaire. The system (100) includes a controller (108a) configured to acquire data from a sensor (120) coupled to the luminaire. The controller (108a) includes an interface (206c) configured to receive data from a distribution board (110) coupled to a modular sensor unit (118) that includes the sensor (120).

## Description

### TECHNICAL FIELD

The present disclosure relates to controllers and data acquisition platforms for luminaires. More particularly, the present disclosure relates to modular lighting controllers and data acquisition platforms.

### BACKGROUND

With the advent of the Internet of Things (IoT), luminaires are now being retrofitted or marketed with hardware and software comp onents that provide new capabilities. These new luminaires, which can be thought of as "smart" luminaires, allow the remote control of lighting applications as well as data analytics, thus providing operators increased flexibility in billing and maintenance scheduling.

Furthermore, smart luminaires also enable additional applications to be paired with typical luminaire applications. For example, cameras, light sensors, traffic sensors and the like can now be interfaced with luminaires in order to provide a wide variety of monitoring and sensing capabilities right at the luminaires. Thus, smart luminaires have become an important paradigm in the deployment of new smart cities or smart buildings infrastructures.

Nevertheless, smart products, such as smart luminaires, have several issues. One of the most common problems with fully integrated sensors and communication units found in typical smart products is that customers might not know their needs well enough to make proper decisions when buying smart products. Also, with integrated sensors, a product might not be useful later when the product's role in the customer's application is changed.

In addition, with integrated sensors, customers have to buy all the sensors built in the fixture, but they might not need all of them or, they might need sensors that are not built-in to the fixture. As such, typical smart products do not allow flexibility in deployment for an end user.

### SUMMARY

The embodiments featured herein help solve or mitigate the above noted issues as well as other issues known in the art. Specifically, with the embodiments described herein, an end user may reconfigure a smart product based on the constraints of the applications. For example, the fixtures can be smart-ready in a very cost-effective way.

Furthermore, in case of manufacturing smart and non-smart fixtures, the embodiments lead to a lower number of parts (i.e. fewer SKUs), since a manufacturer has to provide only one type of housing for both smart and non-smart fixtures. Stated otherwise, because the embodiments are highly modular and reconfigurable, customers do not have to know their needs precisely at the time of acquisition as the fixture can be reconfigured with minimal changes to accommodate future applications and unforeseen scenarios.

One embodiment provides a system disposed within a luminaire. The system includes a controller configured to acquire data from a sensor coupled to the luminaire. The controller includes an interface configured to receive data from a distribution board coupled to a modular sensor unit that includes the sensor.

Another embodiment provides a system disposed within a luminaire. The system includes a controller configured to perform certain operations. The operations can include identifying a modular sensor unit connected to the luminaire. The operations can further include authenticating the modular sensor unit and providing communication between the modular sensor unit and at least one other modular sensor unit connected to the luminaire.

Another embodiment provides a system disposed within a luminaire. The system includes a distribution board configured to perform certain operations. The operations can include providing two-way communication between a modular sensor unit connected to the luminaire and a sensor host controller of the luminaire.

Additional features, modes of operations, advantages, and other aspects of various embodiments are described below with reference to the accompanying drawings. It is noted that the present disclosure is not limited to the specific embodiments described herein. These embodiments are presented for illustrative purposes only. Additional embodiments, or modifications of the embodiments disclosed, will be readily apparent to persons skilled in the relevant art(s) based on the teachings provided.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are only for purposes of illustrating the embodiments and are not to be construed as limiting the disclosure. Given the following enabling description of the drawings, the novel aspects of the present disclosure should become evident to a person of ordinary skill in the relevant art(s).
FIG. 1 illustrates a system in accordance to several aspects described herein.
FIG. 2 illustrates an alternate configuration of the system of FIG. 1 in accordance to several aspects described herein.
FIG. 3 illustrates an alternate configuration of the system of FIG. 1 in accordance to several aspects described herein.
FIG. 4 illustrates an alternate configuration of the system of FIG. 1 in accordance to several aspects described herein.
FIG. 5 illustrates an alternate configuration of the system of FIG. 1 in accordance to several aspects described herein.

### DETAILED DESCRIPTION

While the illustrative embodiments are described herein for particular applications, it should be understood that the present disclosure is not limited thereto. Those skilled in the art and with access to the teachings provided herein will recognize additional applications, modifications, and embodiments within the scope thereof and additional fields in which the present disclosure would be of significant utility.

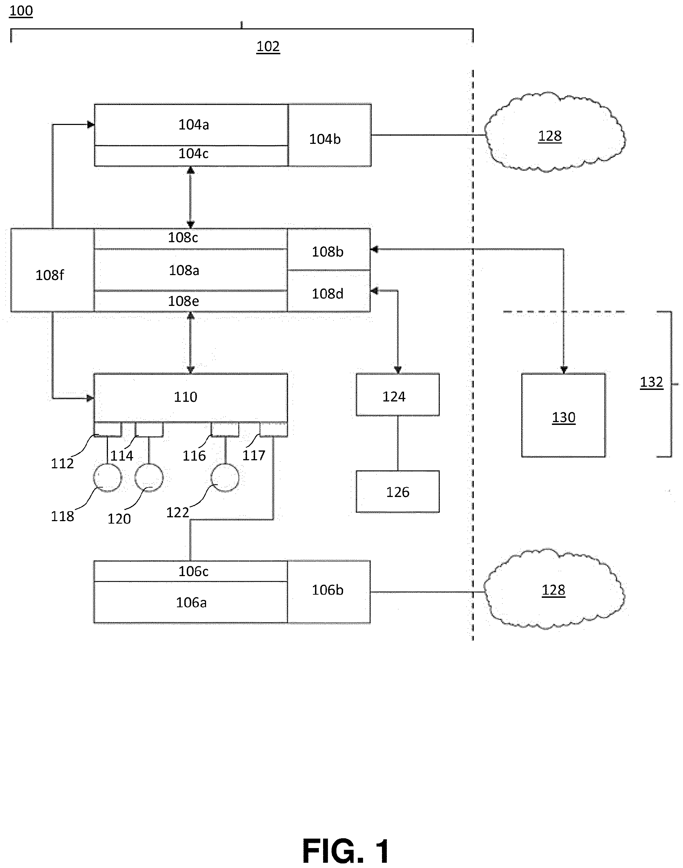

FIG. 1 illustrates a system 100 according to an embodiment. The system 100 is a modular hardware platform that can be configured for use with either indoor or outdoor luminaire systems. The system 100 is capable of intelligent lighting control and advanced data acquisition from a luminaire environment.

The system 100 includes a sensor host controller 108a that is disposed inside a luminaire, the inside of the luminaire being indicated by the bracket 102. The controller 108a can have several communication interfaces. For example, the controller 108a includes a serial communication interface 108c; in some embodiments, the interface 108c be can be configured to support communication messages encoded according to an RS232 - GPIO protocol. Moreover, the controller 108 includes a communication interface 108e configured to support communication messages encoded according to an RS485 (Modbus ASCII) protocol or according a USB protocol.

In general, the controller 108a can provide a gateway function by converting messages from one protocol into a message formatted according to another protocol. For example, a message received at the interface 108c in a first communication protocol can be forwarded to another component connected to interface 108e in a second protocol different than the first.

The controller 108a further includes a power supply unit 108f, a lighting and data acquisition control module 108b, and a driver controller 108d. The power supply unit 108f can be controlled by the controller 108a to provide and regulate power to a single board computer (SBC) 104a and a distribution board 110 or to other components of the system 100. The power provided can be a direct current (DC) power.

The module 108b can be configured to interface with a remote field device 130 via either a wireless or a wired interface. The communication protocol between the module 108b and the remote field device 130 can be achieved via a DALI protocol, a 0-10V bus, a C-bus, Modbus, or a low power radio link, for example. The remote field device 130 can be a programmable logic controller, a third party lighting controller, a server, or a luminaire mesh network node.

Further, the device 130 can be part of a building automation system or network, and it can be part of a general automation interface 132. The controller 108a can further include a driver control module 108d that is configured to provide control signals to a light emitting diode (LED) driver 124 that is configured to drive and provide DC power to one or more LEDs placed on an LED board 126.

The distribution board 110 can be configured as a RS485 board or as a USB hub. It can include a plurality of industrial sockets (112, 114, 116, and 117) that are configured according to one of the aforementioned protocols. One or more of the sockets can be used to connect a modular sensor unit (such as sensor units 118, 120, and 112). The distribution board 110 can further be interfaced to an SBC 206a, via a communication interface 206c of the SBC 206a.

The system 100 includes a SBCs 104a and 106a, each of which can be interfaced with other components of the system 100 via their respective communication interfaces (104c and 106c). Each SBC can include an analytics engine that can process data from the sensors and the luminaires at the luminaire itself, without needing to send data to a remote device for processing.

Each also includes a cloud connectivity interface (104b and 106b) for connecting to a network 128. The SBC 104a and 106a can connect to the network 128 via a suitable communication protocol which may be, for example and not by limitation, any one of a M2M, 3G, 4G, Ethernet, and Wi-Fi protocols. A remote device (e.g., a server) connected to the network 128 (not shown) can provide management, analytics, and services to the system 100 remotely via the network 128.

Lastly, it is noted that while the system 100, as shown in FIG. 1 and in its alternate configurations, is described as being disposed within a luminaire, in other embodiments, the system 100 may be disposed within a housing that is separate from the luminaire, i.e., in a housing that is external to the luminaire. These alternate embodiments can be advantageous for retrofitting exiting luminaires (e.g., existing LED installations).

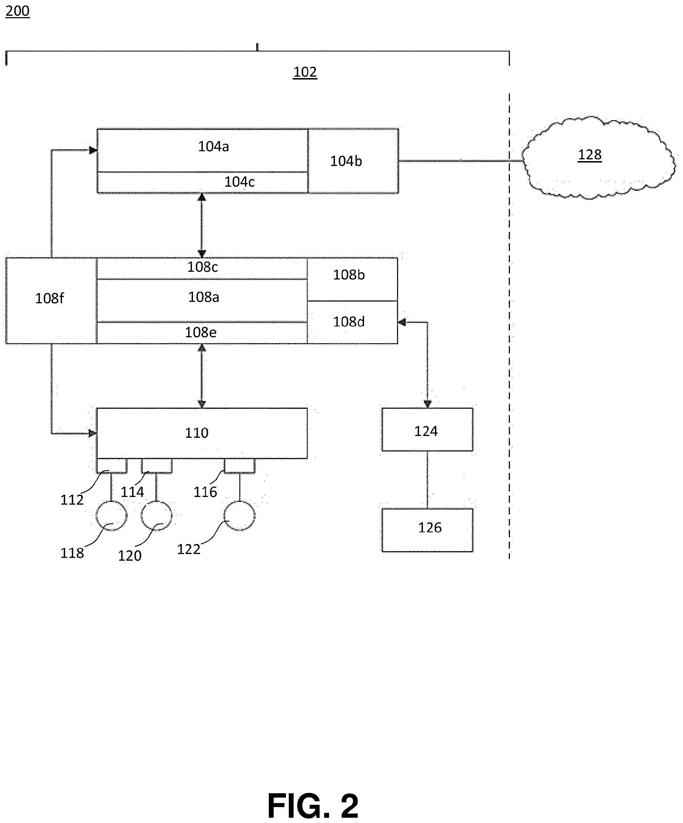

FIGs. 2-5 illustrate several exemplary configurations of the system 100, each configuration being dedicated to specific applications. Specifically, because the system 100 is modular, its components can be reconfigured to accommodate a wide variety of applications that have different constraints and that require different hardware and communications infrastructures.

For example, FIG. 2 illustrates a configuration of the system 100 according to an embodiment. The configuration 200 can be best suited for a typical outdoor application. Specifically, the system 100, as configured in the configuration 200, can be deployed in a typical outdoor luminaire.

In the configuration 200, the system 100 includes the sensor host controller 108a, along with its associated power supply 108f. The configuration 200 further includes the distribution board 110 connected to the controller 108a. The distribution board 110 can be configured according to an RS485 protocol, and it can be connected directly to the controller 108a via its communication interface 108e. A plurality of sensors (118, 120, and 122) are connected to the distribution board 110 via its many sockets (112, 114, and 116). By example, and not by limitation, the sensors 118, 120, and 122 can be light sensors or traffic flow sensors.

The configuration 200 further includes the SBC 104a, which is connected to the communication interface 108c of the controller 108a via its communication interface 104c. The SBC 104a includes the cloud connectivity interface 104b, through which it is communicatively coupled to the network 128. The controller 108e further includes the driver control module 108d, i.e. a communication interface through which it controls the LED driver 124 and the LED board 126.

The configuration 200 offers several advantages for typical outdoor illumination applications. For example, the configuration 200 allows the collection of data from the modular sensors (118, 120, and 122) and the capability to upload such data directly to a remote server or device connected to the network 128. Furthermore, the configuration 200 allows controlling the Light Engine, i.e. the LED driver 124 and the LED board 126, based on local and/or cloud analytics. The local analytics can be provided by the SBC 104a based on data measured at the luminaire whereas the cloud analytics can be obtained remotely from data transferred to a remote analytics device connected to the network 128.

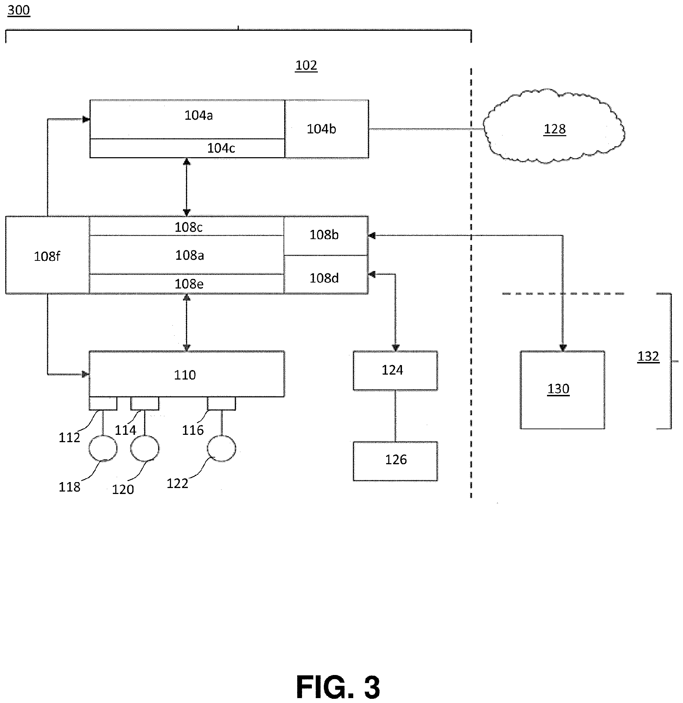

FIG. 3 illustrates a configuration 300 of the system 100, according to yet another embodiment that is geared towards an indoor application in a large office or a retail building. The configuration 300 is similar to the configuration 200, but it in the configuration 300, an indoor luminaire including the system 100 can be readily interfaced to a building automation system (BAS) via the lighting and data acquisition control module 108b. Specifically, the controller 108a can be connected to a field device 130 that is part of the general automation interface 132.

In the configuration 300, the system 100 can collect data from the modular sensors 118, 120, and 122 and upload the data to a cloud database through the network 128. The configuration 300 also allows the controlling of the light engine based on local or cloud analytics. Furthermore, the configuration 300 provides cooperation between the system 100 and the general automated interface 132 via the device 130.

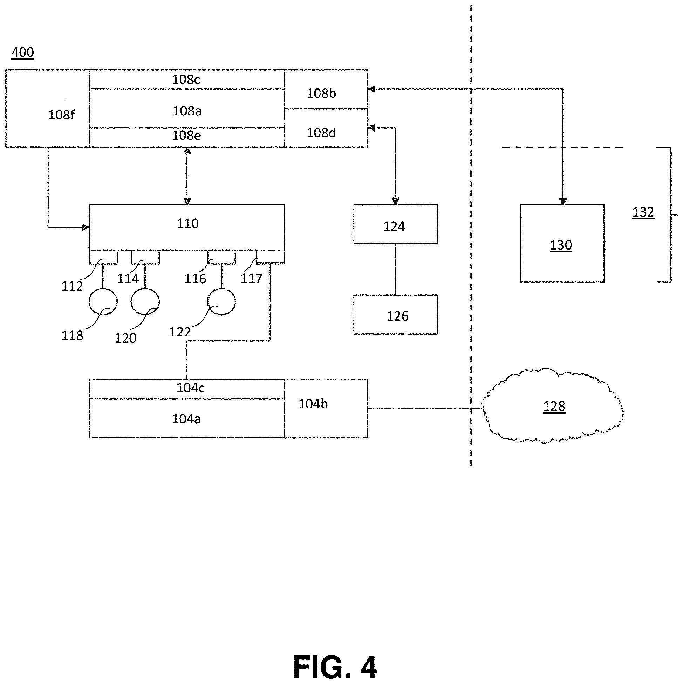

FIG. 4 illustrates a configuration 400 of the system 100 that is optimized for an indoor application in which a luminaire was not previously equipped with cloud connectivity at the time of installation. As such, the configuration 400 is advantageous for providing additional capabilities to exiting indoor luminaire infrastructure by retrofitting the infrastructure with the system 100.

The configuration 400 features the sensor host controller 108a, the distribution board 110, and the SBC 104a. In the configuration 400, the system 100 can collect data via the modular sensors 118, 120, and 122 and upload these data to a cloud database or device communicatively coupled to the network 128. The uploading is achieved through the cloud connectivity interface 104b of the SBC 104a, which is connected to distribution board 110 via a socket 117. The configuration 400 further includes a direct connection to the general automation interface 132 via the device 130, thus allowing interfacing with a building automation system.

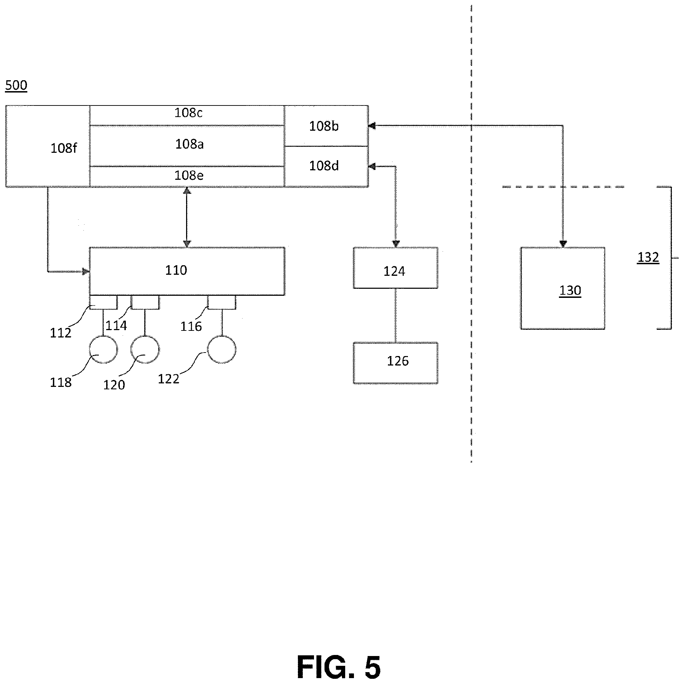

FIG. 5 illustrates yet another configuration 500 of the system 100. The configuration 500 is optimized for typical indoor application that require solely performing data acquisition. In these situations the building automation system may already have its own cloud connectivity, and as such the SBC 104a is not needed to provide on-board analytics and cloud connectivity. As shown in FIG. 5, the configuration 500 features only the distribution board 110 and the sensor host controller 108a, the latter being interfaced directly with the general automation interface 132 via the field device 130.

The embodiments provide a "future-proof" platform for indoor and outdoor luminaire system. Specifically, the embodiments can be reconfigured to provide additional capabilities that are unforeseen at their time of deployment. Moreover, the embodiments can be used to retrofit existing system without extensive changes. The embodiments are also modular hardware/software platforms configured for indoor and outdoor luminaire applications. The embodiments are capable of intelligent lighting control and advanced data acquisition from a luminaire's environment.

In general, the embodiments include a sensor host controller within the luminaire. The sensor host controller provides the capability to connect to various functional extension modules to achieve different functionalities. These functional extension modules can be modular sensor units, communication boards, and interfaces to the luminaire's light engine, as well as to a building automation system.

The exemplary embodiments can be a system that includes several modules. Each module can include a memory and one or more processors. The memory can include instructions that, when executed by the one or more processors, configure the one or more processors to perform some or all of the operations described above in the context of FIGs. 1-5.

The modules can include the sensor host controller, a power unit, and a distribution board, which can be configured according to a suitable communication protocol like RS485 or serve as a USB hub. The modules can further include one or more single board computers that have cloud connectivity. The modules can interface with the luminaire's light engine. A fully equipped exemplary system is shown in FIG. 1. As discussed above, the exemplary system of FIG. 1 can be reconfigured to provide capabilities and accommodate a wide variety of applications as described above with respect to FIGs. 2-5.

The sensor host controller can be configured to recognize and authenticate a functional extension unit that is connected to the system. The sensor host controller can further be configured to manage the power supply of the authenticated functional extension units and to ignore connected devices that are not authenticated. Furthermore, the sensor host controller can provide proper communication between functional extension units. It can provide a gateway function between different types of communication protocols such as (Modbus-DALI, USB-RS232 GPIO).

The sensor host controller can include a Lighting Control & Data Acquisition interface for communication with a building automation system, and/or it can include a communication interface that can communicate and can send or forward control orders to an LED driver of the luminaire. Specifically, the light engine, i.e. the LED driver 124 and the LED board 126 shown in FIGs. 1-5, can receive control messages from the sensor host controller in addition to being able to send data to the sensor host controller about its actual state.

The distribution board module can be an RS485 (Modbus ASCII) distribution board or a USB HUB. The distribution board module provides a two-way data communication with the sensor host controller as well as a proper wiring structure for inserting different type of sensor modules (both for communication and power supply). The distribution board can include one or more industrial or USB sockets. These sockets provide mechanical and electrical connection for the modular sensor units. Furthermore, the distribution board module can send/receive messages via USB or RS485 Modbus ASCII protocols.

The single board computer and cloud connection modules can be connected to the sensor host controller directly. They provide a two-way data communication capability for the sensor host controller. The communication method can be realized via an applicable RS232 serial protocol or a high speed communication protocol, such as an Ethernet protocol.

Furthermore, the single board computer and the cloud connection modules provide secured two-way data communication with the cloud. This communication capability can be realized via M2M, 3G, 4G, Ethernet, or Wi-Fi.

In some embodiments, the single board computer can perform analytics on the local sensor data, and it can forward the results to the cloud or to the sensor host controller for further control. In yet other embodiments, the single board computer can receive analytics from the cloud and forward such analytics to the sensor host controller for further control of the light engine.

Those skilled in the relevant art(s) will appreciate that various adaptations and modifications of the embodiments described above can be configured without departing from the scope and spirit of the disclosure. For example, while the exemplary systems have been described in the context of light fixtures and luminaire applications, the embodiments can be used in a wide variety of IoT applications that require a modular and reconfigurable data acquisition and control infrastructure. Therefore, it is to be understood that, within the scope of the appended claims, the disclosure may be practiced other than as specifically described herein.

Various aspects and embodiments of the present invention are defined by the following clauses:
1. A system, comprising:
   a controller configured to acquire data from a sensor coupled to the luminaire, the controller including an interface configured to receive data from a distribution board coupled to a modular sensor unit that includes the sensor.
2. The system of clause 1, wherein the controller is a sensor host controller.
3. The system of clause 1, further comprising a power unit.
4. The system of clause 1, further comprising the distribution board and wherein the distribution board is a RS485 distribution board.
5. The system of clause 1, further comprising the distribution board and wherein the distribution board is a USB HUB.
6. The system of clause 1, further comprising a single board computer.
7. The system of clause 6, wherein the single board computer includes hardware configured to provide connectivity to a cloud.
8. The system of clause 6, wherein the single board computer is configured to process the data at the luminaire.
9. The system of clause 1, wherein the system is disposed either within the luminaire or outside the luminaire.
10. The system of clause 1, wherein the interface is configured to accommodate modular sensor units that provide different functionalities to the luminaire.
11. A system for use with a luminaire, the system comprising:
   a controller configured to perform operations including:
      identifying a modular sensor unit connected to the luminaire;
   authenticating the modular sensor unit; and
      providing communication between the modular sensor unit and at least one other modular sensor unit connected to the luminaire.
12. The system of clause 11, wherein the operations further include managing a power supply of the modular sensor unit once the modular sensor unit is authenticated.
13. The system of clause 11, wherein the operations further include isolating a non-authenticated modular sensor unit connected to the luminaire.
14. The system of clause 11, wherein the operations further include providing a gateway function between two different communication protocols.
15. The system of clause 14, wherein one of the two different communication protocols is one of (i) Modbus-DALI and (ii) USB-RS232 GPIO.
16. The system of clause 11, wherein the operations further include sending a message to an LED driver.
17. The system of clause 11, wherein the controller further includes a communication interface for communicating with a LED driver.
18. A system for use with a luminaire, comprising:
   a distribution board configured to perform operations including:
      providing two-way communication between a modular sensor unit connected to the luminaire and a sensor host controller of the luminaire.
19. The system of clause 18, wherein the operations further include sending or receiving a message via a USB port.
20. The system of clause 18, wherein the operations further include sending or receiving a message based on a RS485 Modbus ASCII protocol.

## Claims

1. A system (100), comprising:
a controller (108a) configured to acquire data from a sensor (120) coupled to the luminaire, the controller (108a) including an interface (206c) configured to receive data from a distribution board (110) coupled to a modular sensor unit (118) that includes the sensor (120).

2. The system (100) of claim 1, wherein the controller (108a) is a sensor (120) host controller (108a).

3. The system (100) of claim 1 or claim 2, further comprising a power unit.

4. The system (100) of any preceding claim, further comprising the distribution board (110) and wherein the distribution board (110) is a RS485 distribution board (110).

5. The system (100) of any preceding claim, further comprising the distribution board (110) and wherein the distribution board (110) is a USB HUB.

6. The system (100) of any preceding claim, further comprising a single board computer (104a).

7. The system (100) of claim 6, wherein the single board computer (104a) includes hardware configured to provide connectivity to a cloud (128).

8. The system (100) of claim 6, wherein the single board computer (104a) is configured to process the data at the luminaire.

9. The system (100) of any preceding claim, wherein the system (100) is disposed either within the luminaire or outside the luminaire.

10. The system (100) of any preceding claim, wherein the interface (206c) is configured to accommodate modular sensor units (118) that provide different functionalities to the luminaire.

11. A system (200, 300, 400) for use with a luminaire, the system (100) comprising:
a controller (108a) configured to perform operations including:
identifying a modular sensor unit (118) connected to the luminaire;
authenticating the modular sensor unit (118); and
providing communication between the modular sensor unit (118) and at least one other modular sensor unit (118) connected to the luminaire.

12. The system (200, 300, 400) of claim 11, wherein the operations further include managing a power supply (108f) of the modular sensor unit (118) once the modular sensor unit (118) is authenticated and further include isolating a non-authenticated modular sensor unit (118) connected to the luminaire.

13. The system (200, 300, 400) of claim 11 or claim 12, wherein the operations further include providing a gateway function between two different communication protocols.

14. A system (200, 300, 400) for use with a luminaire, comprising:
a distribution board (110) configured to perform operations including:
providing two-way communication between a modular sensor unit (118) connected to the luminaire and a sensor host controller (108a) of the luminaire.

15. The system (200, 300, 400) of claim 15, wherein the operations further include sending or receiving a message via a USB port.
